Europäisches Patentamt

European Patent Office

Office européen des brevets

(11) Veröffentlichungsnummer : **0 459 999 B1**

(12) **EUROPÄISCHE PATENTSCHRIFT**

(45) Veröffentlichungstag der Patentschrift :
**04.11.92 Patentblatt 92/45**

(21) Anmeldenummer : **90902618.9**

(22) Anmeldetag : **12.02.90**

(86) Internationale Anmeldenummer :
**PCT/DE90/00092**

(87) Internationale Veröffentlichungsnummer :
**WO 90/10151 07.09.90 Gazette 90/21**

(51) Int. Cl.⁵ : **F02M 51/06,** F02M 61/18,
F02M 61/20

(54) **ELEKTROMAGNETISCHES HOCHDRUCKEINSPRITZVENTIL.**

(30) Priorität : **25.02.89 DE 3905992**

(43) Veröffentlichungstag der Anmeldung :
**11.12.91 Patentblatt 91/50**

(45) Bekanntmachung des Hinweises auf die
Patenterteilung :
**04.11.92 Patentblatt 92/45**

(84) Benannte Vertragsstaaten :
**DE FR GB IT**

(56) Entgegenhaltungen :
**EP-A- 017 719**
**WO-A-88/08199**
**DE-A- 2 343 243**
**US-A- 4 310 123**
**US-A- 4 552 312**
**US-A- 4 606 502**

(73) Patentinhaber : **SIEMENS
AKTIENGESELLSCHAFT
Wittelsbacherplatz 2
W-8000 München 2 (DE)**

(72) Erfinder : **MESENICH, Gerhard
Alte Bahnhofstrasse 58
W-4630 Bochum 7 (DE)**

EP 0 459 999 B1

Jouve, 18, rue Saint-Denis, 75001 PARIS

## Beschreibung

Die Erfindung betrifft elektromagnetisches Hochdrukeinspritzventil zur Einspritzung von Kraftstoff in den Brennraum von Verbrennungsmotoren. Das Einspritzventil soll hauptsächlich bei kleinen und mittleren Dieselmotoren mit einem Hubraum von 300 $cm^3$ bis 700 $cm^3$ pro Zylinder zur Anwendung kommen. Die typische Durchflußrate des Ventils beträgt 10-25 $mm^3$/ms. Das Einspritzventil ist bis zu einem Kraftstoffdruck von ca. 1000 bar einsetzbar. Das Ventil besitzt einen nadelförmigen Ventilschließkörper, der mit dem Anker eines Elektromagneten verbunden ist. Ähnlich wie bei den bekannten Niederdruckeinspritzventilen wird der Kraftstoffzulauf zur Einspritzdüse beim Anzug des Ankers freigegeben. Das Einspritzventil wird durch eine vom Motor mechanisch angetriebene Hochdruckkolbenpumpe mit Kraftstoff versorgt.

Aufgabenstellung und Stand der Technik

Bei Dieselmotoren werden sehr hohe Einspritzdrücke von bis zu über 1000 bar angestrebt, um die Kraftstoffaufbereitung zu verbessern und die Schadstoffbildung zu veringern. Im allgemeinen wird ein steiler Einspritzverlauf zu Beginn der Einspritzung und ein scharf begrenztes Einspritzende gefordert. Beginn und Zeitdauer der Einspritzung müssen an die Bedingungen der Motorkennfeldes angepaßt werden.

Zur Hochdruckeinspritzung werden üblicherweise rein mechanisch arbeitende Einspritzsysteme eingesetzt. Hierbei wird der Kraftstoff zu Beginn des Einspritzvorganges in einem Pumpenelement verdichtet und die Pumpenenergie als Druckwelle zur Einspritzdüse übertragen. die Einspritzdüse ist mit einer Düsennadel versehen, die durch den Kraftstoffdruck gegen die Kraft einer Feder vom Ventilsitz abgehoben wird. Bei kleinen Einspritzdüsen für Fahrzeugmotoren beträgt die Masse der Düsennadel ca. 5-10 g. Die Rückstellkraft der Feder beträgt je nach Öffnungsdruck der Düse zwischen 400 und 2000 N. Der Stitzdurchmesser der Einspritzventile beträgt in der Regel ca. 2 mm. Durch die hohe Rückstellkraft und die relativ große Masse der Düsennadel ist der Ventilsitz beim Schließen des Ventils einer starken Schlagbelastung ausgesetzt.

Während und nach dem Einspritzvorgang werden zwischen Pumpe und Düse starke Druckwellen reflektiert. Die Amplitude dieser Wellen kann bis zu mehreren 100 bar betragen. Bei den Druckwellen können nach Schließen der Einspritzdüse Berührungen der Nullinie auftreten, bei denen der Dampfdruck des Kraftstoffs unterschritten wird. Dies führt zu Kavitation an den Elementen der Einspritzanlage und zu Hohlraumbildung mit starken stoßartigen Belastungen. Weiterhin können die reflektierten Druckwellen einen erneuten Öffnungsvorgang der Nadel auslösen. Hierbei tritt ein um die Laufzeit der Druckwelle verzögertes Nachspritzen auf, bei dem der Kraftstoff nur noch mangelhaft zerstäubt wird und nur unvollständig an der Verbrennung teilnimmt. Ein zusätzliches Nachspritzen entsteht durch das stets vorhandene Nadelprellen beim schließen des Ventils.

Der Pumpvorgang ist bei den mechanisch arbeitenden Einspritzsystemen an einen bestimmten Drehwinkel fest gekoppelt. Es ergibt sich eine hohe stoßartige mechanische Belastung der Einspritzpumpe, da der gesamte Druckaufbau innerhalb des geringen Drehwinkels in sehr kurzer Zeit stattfindet. Da die Zeit zum Durchlaufen dieses Winkels mit zunehmender Motordrehzahl immer kürzer wird, andererseits jedoch der Querschnitt der Düsenlöcher konstant bleibt, ergibt sich ein starker drehzahlabhängiger Druckanstieg, welcher zu erhebliche Problemen bei der Kraftstoffaufbereitung führt. Bei niedrigen Drehzahlen reicht der Druck meist nicht aus, um die Düsennadel vollständig anzuheben.

Bei teilweise geöffneter Nadel wird der überwiegende Teil des Kraftstoffdrucks im Ventilsitz in Geschwindigkeit umgesetzt und anschließen im Sackloch der Düse verwirbelt. Zur Geschwindigkeitsumsetzung steht dann nur noch ein geringer Kraftstoffdruck vor den Düsenlöchern zur Verfügung, so daß sich eine sehr mangelhafte Zerstäubung ergibt.

Der drehzahlabhängige Druckanstieg erschwert die Abstimmung der Einspritzdüse auf die Erfordernisse des Motors, so daß bei den mechanisch arbeitenden Einspritzsystemen nur in eng begrenzten Drehzahl- und Lastbereichen optimale Verhältnisse erzielt werden.

Es ist naheliegend, Einspritzventile mit elektromagnetischer Betätigung einzusetzen, um die aus dem Druckwellentransport der Kraftstoffs resultierenden Probleme zu umgehen. Bei elektromagnetischen Einspritzventilen ist eine schnelle und prellarme Stellbewegung erforderlich, um eine ausreichende Zumeßgenauigkeit zu erzielen. Diese kann nur mit einem Anker von sehr geringer Masse mit hoher mechanischer Steifigkeit erzielt werden. Die Anzugs- und Abfallzeit sollte weniger als 0.5 ms betragen. Die erforderliche kurze Anzugszeit soll mit möglichst geringer elektrischer Leistung erzielt werden. Die Anpassung der elektromagnetischen Einspritzventile an die Bedingungen der Motorkennfeldes ist mit bekannten elektronischen Steuerungen einfach realisierbar.

Die bekannten elektromagnetischen Einspritzventile zur Einspritzung von Kraftstoff in den Brennraum von Verbrennungsmotoren erfordern eine große Magnetkraft, welche zur Überwindung der an der Ventilnadel angreifenden hydraulischen Kräfte erforderlich ist. Es bestehen enorme Schwierigkeiten, ausreichend schnelle Elektromagnete zu bauen, die die hohen hydraulischen Kräfte mit tragbarem Energieaufwand überwinden können. Die bekannten elektromagnetischen Einspritzventile mit direktbetätigter Ventilnadel besitzen einen sehr starken Elektromagneten, der häufig mehrere gleichzeitig erregte Magnetspulen aufweist. Um mit einem solchen Elektromagnet ausreichend schnelle Stellbewegungen zu erzielen, muß kurzfristig eine enorme elektrische Leistung zur Verfügung gestellt werden. Weiterhin werden die Anker derartiger Elektromagnete möglichst dünnwandig ausgeführt, um eine geringe Ankermasse zu erzielen, und um die Wirbelstrombildung im Magneteisen zu verringern. Wegen der dünnwandigen Ausführung neigen die Anker bei schnellen Stellbewegungen zu starken mechanischen Schwingungen, durch die unerwünschte Prellbewegungen und Störkräfte ausgelöst werden.

Ein bekanntes Einspritzventil (DE-A 23 43 243), das für Zweitaktmotoren vorgesehen ist, weist keine Begrenzung für den Einspritzhub der Nadel auf. Dies macht eine sehr präzise Steuerung des Anlaufhubs erforderlich, die mit manuellen Mitteln eingestellt werden soll.

Ziel der Erfindung ist ein elektromagnetisches Hochdruckeinspritzventil, das bei geringer Erregerleistung ausreichend schnelle und prellarme Stellbewegungen erlaubt. Das Einspritzventil soll im Vergleich zu den bekannten Ausführungen dieser Gattung eine relativ einfache Fertigung erlauben.

## Erfindungsgemäßes Einspritzventil

Bei Untersuchungen des Anmelders hat sich überraschenderweise gezeigt, daß die erforderliche Öffnungsarbeit und das erforderliche Magnetkraftniveau bei gegebenem Ventilhub und gegebenem Durchfluß nahezu unabhängig vom Einspritzdruck ist. Daher ist bei einem kleinen erforderlichen Durchfluß auch bei sehr hohem Einspritzdruck nur eine geringe Öffnungsarbeit erforderlich, die bereits von einem sehr kleinen Anker mit sehr geringer Masse aufgebracht werden kann. Hierzu ist jedoch ein außergewöhnlich geringer Durchmesser des Ventilsitzes erforderlich. Der Durchmesser des Ventilsitzes beträgt bei dem erfindungsgemäßen Einspritzventil vozugsweise 0.5-0.8 mm. Bereits bei einem derartig kleinen Sitzdurchmesser kann die erforderliche Durchflußrate zum Betrieb von kleinen Dieselmotoren mit einem geringem Hub von 0.05-0.15 mm erzielt werden.

Bei der erfindungsgemäßen Dimensionierung des Einspritzventils ist die erforderliche maximale Öffnungkraft bei gegebenem Hub lediglich vom verlangten Durchfluß abhängig. Der Hub des Ventils sollte ca. 0.05-0.15 mm betragen. Das Einspritzventil wird durch entsprechende Verringerung des äußeren Durchmessers des Ventilsitzes bis herab zu 0.4 mm an hohe Kraftstoffdrücke angepaßt. Die maximale Öffnungskraft ergibt sich aus dem Produkt aus Kraftstoffdruck und der nicht druckausgeglichenen Fläche des Ventilsitzes. Die nicht druckausgeglichenen Fläche des Ventilsitzes beträgt stets weniger als 1 mm².

Bei den üblichen Hochdruckeinspritzventilen ist ein zuverlässiger Betrieb bei einem derartig geringen Sitzdurchmesser von vozugsweise 0.5-0.8 mm nicht möglich. Der Ventilsitz würde bei einem derartig geringen Durchmesser wegen der hohen Schlagbelastung schnell zerstört werden. Der Fachmann wird daher zunächst vermuten, daß wegen des geringen Sitzdurchmessers des erfindungsgemäßen Ventils ein zuverlässiger Betrieb wegen untragbaren Verschleißes im Sitzbereich nicht möglich sein wird. Aufgrund des geringen Durchmessers des Ventilsitzes beträgt jedoch die maximale unausgeglichene hydraulische Schließkraft nur ca. 5-20 N. Diese geringe hydraulische Gegenkraft kann bereits mit einem sehr kleinen Elektromagneten überwunden werden. Der Zuverlässige Betrieb des erfindungsgemäßen Einspritzventils wird durch ein gegenüber der üblichen Hochdruckeinspritzventilen drastisch verringertes Kraftniveau und eine besonders geringe Ankermasse von vorzugsweise ca. 1-2 g ermöglicht. Durch das geringe Kraftniveau und die geringe Ankermasse wird die auftretende Schlagbelastung im Sitzbereich innerhalb zulässiger Grenzen gehalten.

Weiterhin ist der Anker des Einspritzventils vollständig von unter Druck stehendem Kraftstoff umspült. Der Ankerraum ist im Gegensatz zu den meisten bisher vorgeschlagenen Konstruktionen nicht durch eine enge Nadelführung vom Systemdruck getrennt. Die vollständige Umspülung des Ankers mit unter Druck stehendem Kraftstoff ist bei dem erfindungsgemäßen Einspritzventil unbedingt erforderlich, um die Entstehung von unausgeglichenen Störkräften weitgehend zu verhindern.

Weitere erforderliche und zweckmäßige Maßnahmen, die den zuverlässigen Betrieb des Einspritzventils trotz der geringen Magnetkraft erlauben, werden anhand der Ausführungsbeispiele nachfolgend erläutert:

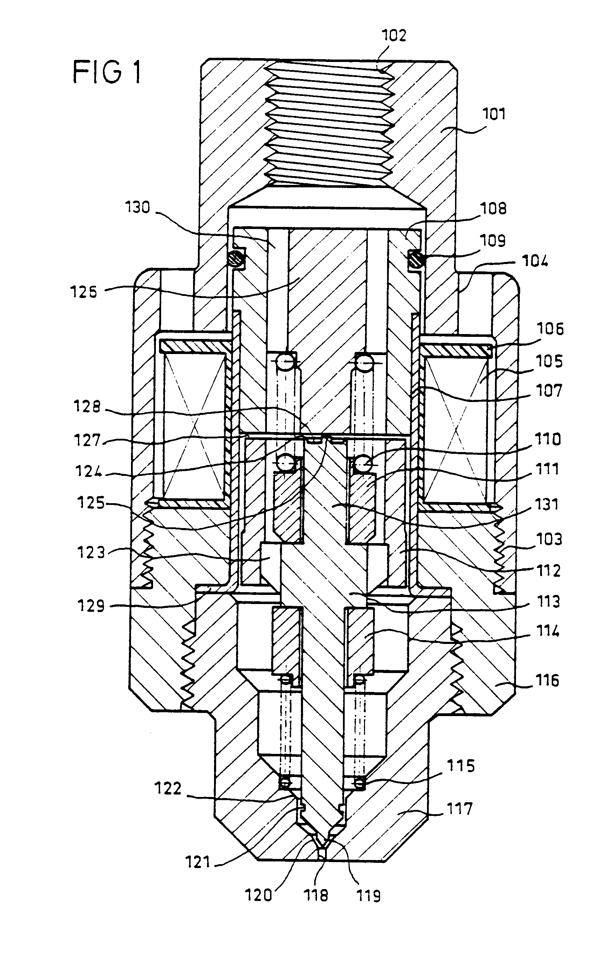

Fig.1 zeigt ein erfindungsgemäßes Hochdruckeinspritzventil, dessen Außendurchmesser lediglich ca. 20 mm beträgt. Der Auslegungsdruck des Ventils beträgt ca. 200-300 bar. Der Ankerhub des Ventils beträgt 0.05-0.1 mm, der Außendurchmesser des Ventilsitzes beträgt 0.8 mm. Der Magnetkreis des Ventils besteht aus dem Anker 112, dem Magnetpol 108, dem Gehäuse 101 und dem Träger 116. Sämtliche Teile des Magnetkreises bestehen aus weichmagnetischem Material. Die Erregung des Magnetkreises erfolgt durch die Magnetspule 105, die auf den Spulenkörper 106 aufgewickelt ist. Die Magnetspule 105 besitzt vorzugweise ca. 100 Windungen. Der Magnetpol 108 und der Anker 112 sollten aus einem Material mit hoher Sättigungsinduktion bestehen, um eine möglichst hohe Magnetkraft zu erzielen. Als Material ist ein Eisenwerkstoff mit bis zu 50% Cobaltanteil gut geeignet. Der Außendurchmesser des Ankers 112 beträgt vorzugsweise ca. 7-8 mm, die Wandstärke beträgt vorzugsweise ca. 1-1.2 mm. Die maximal Magnetkraft des Elektromagneten beträgt bei Sättigung des Magneteisens ca. 25-40 N.

Der rohrförmige Anker 112 ist auf die Ventilnadel 113 aufgepreßt, die mit dem zentralen Anschlagstift 125 unmittelbar auf dem Anschlagelement 126 zum Anschlag gelangt. Der Anker 112 ist durch eine zusätzliche Laserschweißung oder durch Verlöten mit der Ventilnadel 113 gegen axial Verlagerung gesichert. Die Rückstellung des Ankers erfolgt durch die Rückstellfeder 110, welche innerhalb des Ankers 112 und des Magnetpols 108 angeordnet ist.

Die Anschlagfläche des Anschlagstiftes 125 überragt die Stirnfläche des Ankers 112 um ca. 50 Mikrometer, so daß auch bei angezogenem Anker ein Restluftspalt zwischen Pol und Anker verbleibt. Durch den Restluftspalt wird ein rascher Abbau des Magnetfeldes nach dem Abschalten des Erregerstroms erzielt. Weiterhin wird durch den Restluftspalt eine unzulässig starke Dämpfung der Anzugsbewegung des Ankers vermieden.

Am unteren Ende der Ventilnadel ist ein nadelförmiger Schließkörper 119 angearbeitet, der den Ventilsitz 120 verschließt. Der Durchmesser des nadelförmigen Schließkörpers 119 beträgt ca. 2 mm. Der kegelförmige Ventilsitz 120 und die Düse 118 ist unmittelbar in den Düsenträger 117 eingearbeitet. Die Düse 118 ist ohne Zwischenschaltung des sonst üblichen Sackloches unmittelbar unterhalb des Ventilsitzes 120 angeordnet. Hierdurch wird eine sehr gute Strömungqualität mit einer wirbelarmen Umsetzung des Kraftstoffdruckes erzielt.

Das Einspritzventil besitzt eine hydraulische Kennlinienanpassung, bei der die hydraulischen Rückstellkräfte bei angezogenem Anker diejenigen bei abgefallenem Anker übersteigen. Mit einer derartigen Kennlinienanpassung wird die Rückstellzeit des Ankers erheblich verkürzt. Hierzu ist das untere Ende der Ventilnadel 113 mit geringem Radialspiel von einigen 1/100 mm innerhalb der Führungsbohrung 112 geführt. Der Durchmesser der Führungsbohrung 112 beträgt ca. 2 mm. Innerehalb des Ringspaltes zwischen der Ventilnadel 113 und der Führungsbohrung 112 entsteht ein Druckabfall, der mit zunehmendem Durchfluß und damit mit zunehmendem Ankerhub zunimmt. Durch diesen Druckabfall wird eine mit zunehmendem Ankerhub zunehmende hydraulische Kraft erzeugt, die der Magnetkraft entgegengerichtet ist. Das Radialspiel des Ventilnadel innerhalb der Führungsbohrung wird so bemessen, daß bei angezogenem Anker hinter dem Ringspalt ein bleibender Druckabfall von ca. 10-20% des statischen Kraftstoffdruckes entsteht. Der Durchmesser des Ringspaltes sollte etwa 2-3 fach größer als derjenige des Ventilsitzes 111 gewählt werden. Bei des angegebenen Dimensionierung wird eine hydraulische Zentrierung des Schließkörpers und eine Dämpfung der Aufschlagbewegung des Schließkörpers auf den Ventilsitz erzielt, ohne daß hierdurch die Rückstellzeit des Ankers unzulässig verlängert würde. Durch die Dämpfung der Rückstellbewegung wird das Schließprellen stark vermindert. Innerhalb der Ventilnadel 113 ist eine Nut 121 angeordnet. Die Nut 121 dient zur Vergrößerung des bleibenden Druckabfalls und zur gleichmäßigen Verteilung des Druckabfalls über den Umfang des Ringspaltes.

Der Magnetpol 108 wird von einer nichtmagnetisierbaren Hülse 107 getragen, die am unteren Ende einen Kragen 129 besitzt. Die Hülse 107 ist mit dem Kragen 129 zwischen dem mittleren Gehäuseteil 116 und dem Düsenträger 117 eingeklemmt. Das Ventilgehäuse 101 ist mit dem mittleren Gehäuseteil 116 verschraubt. Die Befestigung des Magnetpols 108 innerhalb der Hülse 107 erfolgt vorzugsweise durch Einpressen und anschließende Laserschweißung oder durch Hartlöten. Die Hülse 107 sollte aus austenitischem Stahl mit möglichst hohem elektrischen Widerstand bestehen, um die Wirbelstrombildung innerhalb der Hülse gering zu halten. Innerhalb des Magnetpols 108 ist ein Anschlagelement 126 eingepreßt, das aus nicht magnetisierbarem Material besteht. Das Anschlagelement 126 ist mit dem Magnetpol 108 fest verbunden und mit seitlichen Nuten 130 versehen, die einen Kraftstoffdurchtritt erlauben. Die Stirnfläche des Anschlagelementes 126 und diejenige des Magnetpols 108 befinden sich in einer gemeinsamen Ebene.

Der Kraftstoff gelangt durch eine nicht dargestellte Versorgungsleitung in das Ventilgehäuse. Die Versorgungsleitung wird mit dem oberen Gehäuseteil 101 verschraubt. Von hier gelangt der Kraftstoff durch seitliche Nuten im oberen Anschlag 126 und durch seitliche Nuten 123 in der Ventilnadel 113 zum Ventilsitz 120. Der Magnetpol 118 ist durch den Dichtring 109 gegen das Gehäuse 101 abgedichtet.

Zu Beginn der Ankerrückstellung entsteht eine hydraulische Klebekraft durch Vakuumbildung zwischen dem Anschlagstift 125 und dem Anschlagelement 126. Die hydraulische Klebekraft ist der Kraft der Rückstellfeder 110 engegengerichtet und bewirkt eine unerwünschte Verzögerung der Ankerrückstellung. Bei einer zu großen Anschlagfläche kann es sogar zu einer Blockierung und damit zur Funktionsuntüchtigkeit des Ventils kommen. Daher ist es unbedingt erforderlich, die hydraulische Klebekraft so gering wie möglich zu halten. Die Größe der Berührungsfläche zwischen dem Anschlagstift 125 und dem Anschlagelement 126 sollte diejenige des Ventilsitzes keinesfalls überschreiten. Der Durchmesser des Anschlagstiftes 125 sollte daher geringer als derjenige des Ventilsitzes sein. Der Durchmesser des Anschlagstiftes 125 beträgt vorzugsweise 0.5-1 mm. Weiterhin muß eine direkte Berührung zwischen Magnetpol 108 und Anker 112 unbedingt vermieden werden, um eine hydraulische Blockierung des Ankers zu verhindern.

Aufgrund der sehr geringen Anschlagfläche zwischen dem Anschlagstift 125 und dem Anschlagelement 126 kommt es beim Aufschlag des Ankers zu einer hohen Schlagbelastung. Diese hohe Schlagbelastung muß durch Dämpfung der Anzugsbewegung des Ankers auf zulässige Werte begrenzt werden. Hierzu ist an der Stirnseite der Ventilnadel 113 eine Dämpfungskammer eingearbeitet, die durch die umlaufende Tasche 128 gebildet wird. Die Dämpfungskammer ist von einem schmalen Kragen 124 umgeben. Die Stirnfläche des umlaufenden Kragens 124 ist gegenüber der Stirnfläche des Anschlagstiftes 125 um ca. 5-10 Mikrometer zurückversetzt. Hierdurch verbleibt auch bei angezogenem Anker eine enger Quetschspalt, durch den der Kraftstoff während des Ankeranzugs herausgepreßt wird. Durch die Quetschströmung wird eine Dämpfung der Aufschlagbewegung erzielt. Eine zusätzliche Dämpfung erfolgt durch die Quetschströmung im Bereich des Restluftspaltes 127. Durch die zuvor beschriebenen Maßnahmen wird eine gute Dämpfung der Aufschlagbewegung des Ankers bei minimalem hydraulischem Kleben erzielt. Ohne Dämpfungsmaßnahmen wäre ein stabiler und verschleißarmer Betrieb des Einspritzventils bei der sehr geringen Fläche des Anschlagstiftes 125 nicht möglich. Zur Fertigung der Dämpfungskammer und der Anschlagstiftes 125 wird zweckmäßigerweise zunächst die Polfläche 127 des Ankers 112 gemeinsam mit der Stirnfläche der Ventilnadel 131 plan geschliffen. Anschließend wird die zurückverlegte Dämpfungskammer 128 und der Restluftspalt durch Einprägen oder durch Elektroerodieren der Stirnfläche gefertigt.

Bei einem sehr geringen Durchmesser des Anschlagstiftes 125 wird eine Selbststabilisierung des Ventils durch Verschleiß erzielt. Bei einem Verschleiß im Bereich der Anschlagfläche vermindert sich der freie Strömungsquerschnitt zwischen dem Kragen 124 und dem Anschlagelement 126. Hierdurch entstehen stark anwachsende Dämpfungskräfte, die die Schlagbelastung beim Anzug des Ankers stark vermindern. Wegen der mit zunehmendem Verschleiß abnehmenden Schlagbelastung kann bereits nach einer kurzen Einlaufphase ein Stillstand des Verschleißes erzielt werden. Durch den Verschleiß vergrößert sich jedoch der Ventilhub und damit der Durchfluß des Ventils. Bei entsprechend eng tolerierten Teilen ist diese Hubveränderung jedoch auf wenige Mikrometer begrenzt. Derartig geringe Hubveränderungen sind bei dem erfindungsgemäßen Einspritzventil noch tragbar.

Zwischen der Rückstellfeder 110 und der Ventilnadel 113 ist ein Schwingungstilger 111 angeordnet, welcher zur Verminderung der Prellschwingungen dient. Der Schwingungstilger 111 wird von der Stiftförmigen Verlängerung 131 mit geringem Radialspiel axial beweglich geführt. In der Ruhelage wird der Schwingungstilger 111 durch die Kraft der Rückstellfeder 110 fest auf die Schulter der Ventilnadel 113 gepreßt. Nach dem Ankeraufschlag löst sich der Schwingungstilger 111 durch die innewohnende kinetische Energie von der Schulter der Ventilnadel wodurch im Auflagebereich ein enger Spalt entsteht. Hierbei wird zunächst die Ventilnadel 113 von der Kraft der Rückstellfeder entlastet. Weiterhin entsteht die eine sehr starke hydraulische Kraft in Richtung der Öffnungsbewegung, die durch Vakuumbildung innerhalb des entstehenden Spaltes ausgelöst wird. Diese Kraft wirkt den Prellschwingungen entgegen, wodurch diese in kürzester Zeit zum Stillstand kommen. Durch den Schwingungstilger 111 werden auch bei sehr kurzen Öffnungszeiten außerordentlich prellarme, stabile Bewegungsverhältnisse erzielt. Die Masse des Schwingungstilgers ist bei dem erfindungsgemäßen Hochdruckeinspritzventil in weiten Grenzen unkritisch. Die dynamisch günstigsten Verhältnisse werden bei einer Masse des Schwingungstilgers von ca. 10% der Masse von Anker und Ventilnadel erzielt.

Unterhalb des Ankers ist ein weiterer Schwingungstilger 114 angeordnet, der zur weiteren Dämpfung der Prellschwingungen beim Schließen des Ventils dient. Der Schwingungstilger 114 wird durch eine schwache Feder 115 gegen die untere Schulter der Ventilnadel gedrückt. Die Kraft der Feder 115 ist erheblich geringer als diejenige der Rückstellfeder 110. Die Dämpfung des Schließprellens erfolgt in gleichartiger Weise wie bei dem oberen Schwingungstilger. Die Dämpfung des Schließprellens erfolgt durch Vakuumbildung und Federkraftentlastung in Bereich der Auflageschulter des unteren Schwingungstilgers 114. Ein derartiger Schwingungstilger kann auch bei den bekannten mechanischen Einspritzdüsen zur Verringerung des Schließprellens eingesetzt werden.

Die Kalibrierung des Ventils kann in bekannter Weise durch Selektion von zueinander passenden Teilen erfolgen.

Das Ventil wird durch bekannte elektronische Schaltungen unmittelbar mit der Bordnetzspannung von ca. 12 V angesteuert. Hierbei erfolgt bis zum Ende des Anzugsvorgangs eine Übererregung mit einem Spitzenstrom von bis zu ca. 10 A, der in der anschließenden Haltephase auf ca. 2-3 A vermindert wird. Bei einer derartigen Ansteuerung werden Anzugszeiten von insgesamt unter 0.5 ms erzielt. Die Anzugzeit setzt sich aus der Anzugsverzugszeit und der Öffnungsbewegungszeit des Ankers zusammen. Die Anzugsbewegungszeit beträgt ca. 0.15-0.2 ms. Die Abfallzeit des Ventils wird in der Regel ca. 0.3 ms betragen.

Gegenüber bekannten Ventilausführungen wird bei der erfindungsgemäßen Ausbildung und Dimensionierung des Hochdruckeinspritzventils eine Vielzahl von Vorteilen erzielt:

Das Ventil erlaubt eine kostengünstige Fertigung, da die Führungen des Ankers und der Ventilnadel mit vergleichsweise geringer Präzision gefertigt werden können. Der Magnetpol 108 und die Hülse 107 sind nahezu vollständig von Axialkräften entlastet. Hierdurch ist eine leichte, dünnwandige und wirbelstromarme Bauweise möglich. Bei den bekannten Ventilen muß die Führung der Ventilnadel mit außerordentlich hoher Präzision gefertigt werden, da diese zur Abdichtung des Druckraumes dient. Weiterhin erfordern diese Ventile zusätzliche Rücklaufleitungen zur Rückführung des Leckkraftstoffs. bei dem erfindungsgemäßen Ventil ist ein Abdichtung innerhalb der Nadelführung nicht erforderlich. Das Ventil besitzt nur wenige mögliche Leckpfade. Auf Rücklaufleitungen kann verzichtet werden.

Bei den einzelnen Betätigungsvorgängen entstehen nur sehr gerine Druckschwingungen, da innerhalb des Ventils eine relativ große Kraftstoffmenge gespeichert wird. Die Druckschwingungen werden aufgrund des hohen Betriebsdruckes durch die Elastizität der im Ventil gespeicherten Kraftstoffmenge weitgehend aufgefangen. Weiterhin steht ein relativ großer Querschnitt zur Kraftstoffzufuhr zu Verfügung, der der Entstehung von Druckwellen entgegenwirkt. Die Amplitude der Druckschwingungen verringert sich mit zunehmendem Querschnitt der Kraftstoffversorgungsleitung. Der Innendurchmesser der Kraftstoffversorgungsleitung sollte mindestens 2-3 mm betragen. Die maximale Amplitude der Druckschwingungen wird in der Regel ca. 20-50 bar nicht überschreiten.

Wegen der geringen Druckschwingungen ist innerhalb des Ventils auch bei sehr ungünstigen Betriebszuständen stets ein hoher Kraftstoffdruck vorhanden. Eine Hohlraumbildung innerhalb des Kraftstoffs aufgrund von Druckwellen ist völlig ausgeschlossen. Berührungen der Nullinie und die Entstehung von Kavitation innerhalb der Leitungen ist nicht zu befürchten. Eine Gasrückblasung vom Motor in das Ventil ist wegen des stets vorhandenen hohen Kraftstoffdruckes nicht möglich.

Das Ventil besitzt wegen des drastisch herabgesetzten Kraftniveaus und der geringen Ankermasse einen vergleichsweise sehr geringen elektrischen Energiebedarf. Das Ventil besitzt außerordentlich geringe Abmessungen und erlaubt rasche Stellbewegungen. Wegen der Dämpfungsmaßnahmen werden prellarme Bewegungsverläufe erzielt. Das Ankerprellen wird in der Regel in weniger als 0.05-0.1 ms zum Stillstand kommen. Selbst bei eventuellem Schließprellen wird der Kraftstoffdruck unmittelbar im Ventilsitz in eine hohe Geschwindigkeit umgesetzt, die stets ein vollständiges Abspritzen der gesamten zugemessenen Kraftstoffmenge mit guter Zerstäubung bewirkt. Auch bei eventuellen Nachspritzern wird eine sehr gute Zerstäubung erzielt. Aufgrund des sehr geringen Sitzdurchmessers werden keine nennenswerten Kraftstoffmengen unterhalb des Ventilsitzes gespeichert.

Aufgrund der hohen Arbeitsgeschwindigkeit kann eine geringe Teilmenge des Kraftstoffs bereits zu einem frühen Zeitpunkt mit einem separaten Einspritzvorgang dem Motor zugeführt werden. Eine derartige Arbeitsweise dient zur Bildung von magerem Grundgemisch und wird als Piloteinspritzung bezeichnet. Bekanntlich kann durch eine Piloteinspritzung der Zündverzug und der Schadstoffausstoß von Dieselmotoren verringert werden.

Im Folgenden werden einige Varianten des erfindungsgemäßen Ventils anhand weiterer Ausführungsbeispiele näher erläutert:

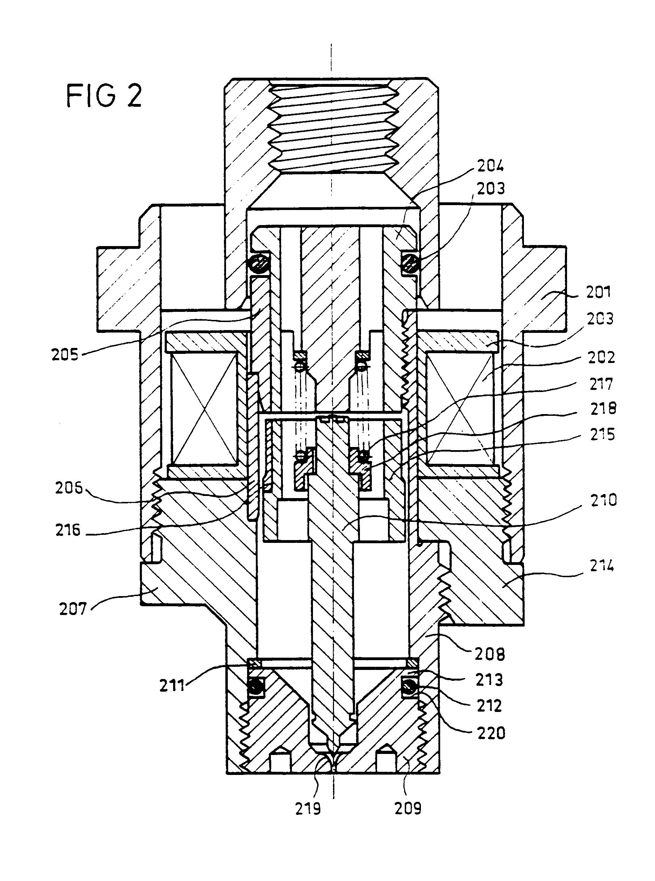

Fig.2 zeigt ein weiteres Hochdruckeinspritzventil, das ähnlich demjenigen gemäß Fig.1 aufgebaut ist. Hierbei sind auf der rechten und auf der linken Seite zwei leicht verschiedene Ausführungen dargestellt. Es werden verschiedene Möglichkeiten zu Befestigung des Magnetpols und eine besonders günstige Ausbildung zur Einstellung des Ankerhubes erläutert. Hierbei wird nur auf die von Fig.1 abweichenden Details eingegangen.

Der Magnetkreis des Ventils besteht aus dem Magnetpol 204, dem Gehäuse 201 und dem Anker 215. Weiterhin erfolgt der magnetische Rückschluß auf der rechten Seite von Fig.2 durch den Träger 214, der mit der Traghülse 208 verschraubt ist. Der Magnetpol 204 ist unmittelbar mit der nichtmagnetisierbaren Traghülse 208 verschraubt. Auf der linken Seite von Fig.2 wird der Pol 204 von einer nichtmagnetisierbaren Hülse 206 getragen, die innerhalb der unteren Traghülse 207 aus magnetisierbarem Material befestigt ist. Die Befestigung erfolgt hierbei vorzugsweise durch Hartlöten oder durch eine Laserschweißung. Die Bearbeitung der Stirnfläche des Magnetpols 204 und der Führungsbohrung für den Anker 215 kann gemeinsam in einer Aufspannung erfolgen, wodurch die Einhaltung einer genauen rechtwinkligen Lage leicht möglich ist. Weiterhin sind der Pol 204 und der Anker 215 auf der linken Seite von Fig.2 aus jeweils zwei konzentrischen Teilen zusammengesetzt. Hierbei trägt der Anker 215 die Hülse 216 und der Pol 204 trägt die Hülse 204. Der Vorteil einer solchen Ausführung besteht in verminderter Wirbelstrombildung, da die einzelnen Teile insgesamt dünnwandiger ausgeführt werden können.

Die Einstellung des Ankerhubes erfolgt durch Verdrehen des Sitzträgers 209. Hierzu wird der Sitzträger 209 gegenüber dem Ventilhals 208 spielfrei verspannt. Die Verspannung erfolgt durch die Federwirkung der Schulter 213 oberhalb der Dichtringnut 220. Mit dem verspannbaren Sitzträger 209 wird eine hohe Spannkraft bei besonders geringer Baugröße des Ventils erzielt. Zwischen der Schulter 213 und der Schulter des Ventilhalses 208 ist ein Paßring 211 angeordnet. Der Paßring 211 dient zur Grobeinstellung des Ventilhubes. Die Feinkalibrierung erfolgt sodann nach einem Probelauf des Ventils durch entsprechendes Verdrehen des Sitzträgers 209. Alternativ kann auch eine verspannbare Schulter am äußeren Umfang des Sitzträgers angeordnet werden, die dann auf dem Ende des Halses 208 zur Auflage gelangt. Die notwendige Federungsfähigkeit wird dann ebenfalls durch eine hinterschnittene Nut innerhalb des Sitzträgers erzielt. Der verspannbare Sitzträger 209 erlaubt eine besonders einfache und zuverlässige statische Kalibrierung des Ventils. Mit einem getrennten Federelement wäre die erforderliche Langzeitstabilität der Einstellung nicht zuverlässig gewährleistet. Der verspannbare Sitzträger ist auch bei Niederdruckeinspritzventilen vorteilhaft anwendbar.

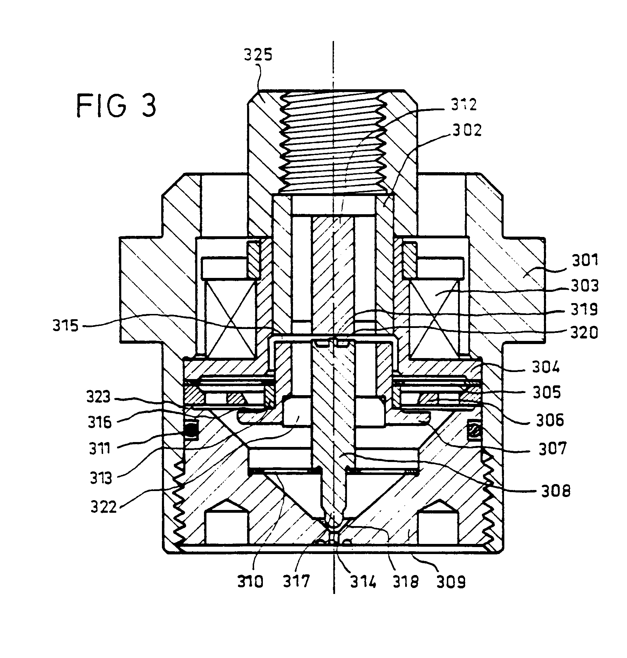

In Fig.3 ist ein weiteres Hochdruckeinspritzventil dargestellt, dessen Magnetkreis einen doppelten Arbeitsluftspalt besitzt. Der Außendurchmesser des Ventils beträgt ca. 20 mm.

Der Magnetkreis des Ventils besteht aus dem Anker 307, dem Zentralpol 302, dem Gehäuse 301 und dem Seitenpol 306. Der Magnetkreis besitzt zwei Arbeitsluftspalte 315 und 316. Der zentrale Arbeitsluftspalt 315 ist innerhalb der Magnetspule 303 angeordnet. Der äußere Durchmesser des Zentralpoles 302 beträgt ca. 6-8 mm. Die Wandstärke des Zentralpoles 302 beträgt ca. 0.8-1.2 mm. Die Fläche der beiden Magnetpole beträgt jeweils ca. 15-20 mm$^2$. Bei angezogenem Anker 307 verbleibt im Bereich der Arbeitspole 315 und 316 ein Restluftspalt von jeweils ca. 0.05 mm. Der Ventilhub beträgt vorzugsweise ca. 0.05-0.1 mm. Die Magnetspule 303 ist auf einen Spulenkörper 304 aus nicht magnetisierbarem Material aufgewickelt. Der Spulenkörper 304 dient zur Abdichtung des Spulenraumes und kann biespielsweise aus austenitischem Stahl oder aus hochfester Keramik bestehen. Der Spulenraum kann zur Abdichtung und zur Verbesserung der Mechanischen Stabilität mit einer Vergußmasse ausgefüllt werden. Weiterhin kann die Magnetspule 303 auch aus einer dünnen Folie gefertigt werden. Eine derartige Folienspule besitzt eine sehr hohe mechanische und elektrische Stabilität, so daß dann auch auf eine Abdichtung des Spulenraumes gegenüber dem Systemdruck verzichtet werden kann. Die Ventilnadel 308 besitzt einen seitlichen Kragen 322, an dem der Anker 307 befestigt ist. Die gesamte bewegte Masse des Ankers 307 und der Ventilnadel 308 beträgt zusammen ca. 1 g. Der Durchmesser der Ventilnadel 308 beträgt ca. 2-2.5 mm. An die Ventilnadel 308 ist ein ballischer Stift 317 angearbeitet, der den Ventilsitz verschließt. Der Durchmesser dieses Stiftes 317 beträgt ca. 0.8 mm. Die nicht druckausgeglichene Fläche des Ventilsitzes 318 beträgt ca. 0.3 mm$^2$. Der Auslegungsdruck des Ventils beträgt ca. 500 bar. An der Oberseite der Ventilnadel 308 ist ein Anschlagstift 319 angearbeitet, dessen Durchmesser ca. 0.5-0.8 mm beträgt. Der Anschlagstift 319 ist von der Dämpfungskammer 320 umgeben. Der Anschlagstift 319 kommt bei angezogenem Anker 307 an dem zentralen Anschlag 312 zur Anlage. Der zentrale Anschlag 312 besteht aus nichtmagnetisierbarem Material und ist innerhalb des Magnetpols 302 beispielsweise durch eine Hartlötung befestigt. Die Ventilnadel 308 ist zwischen zwei Membranfedern 305 und 310 eingespannt, und wird durch diese mit geringem Spiel in radialer Richtung geführt. Die Membranfedern 305 und 310 sind mit Durchbrüchen versehen, um den Kraftstoffdurchtritt zu ermöglichen. Zwischen dem Anker 307 und der oberen Membranfeder 305 ist der Schwingungstilger 313 angeordnet. Durch Auswahl einer geeigneten Dicke des des Schwingungstilgers 313 ist die Einstellung der Rückstellfederkraft möglich. Ein weiterer nicht dargestellter Schwingungstilger kann zwischen der unteren Membranfeder 310 und der Ventilnadel 308 angeordnet werden. Der Spulenkörper 304, die Membranfeder 305 und der Seitenpol 306 werden durch den Sitzträger 309 innerhalb des Gehäuses 301 festgespannt. Der Sitzträger 309 ist im Bereich der Dichtringnut 311 elastisch ausgebildet, wodurch eine Kalibrierung des Ventilhubs durch entsprechend tiefes Einschrauben des Sitzträgers 309 möglich ist. Die Kraftstoffzufuhr zum Ventilsitz 318 erfolgt durch den zentralen Stutzen 325 am Gehäuse 301, durch seitliche Nuten im zentralen Anschlag 312 und im Kragen 322 der Ventilnadel 308, weiter durch die Durchbrüche in den Membranfedern 305 und 310.

Der Vorteil vorstehenden Ventilausführung gegenüber den Ventilausführungen gemäß Fig.1 und Fig.2 besteht in einer geringeren Wirbelstrombildung, da der Magnetkreis bei einer vorgegebenen maximalen Magnetkraft dünnwandiger ausgeführt werden kann.

Weiterhin ergibt sich eine geringere Ankermasse, wodurch noch schnellere Ankerbewegungen möglich sind. Das Ventil besitzt eine Selbstzentrierungsfähigkeit, wodurch geringere Fertigungsungenauigkeiten ausgeglichen werden können. Nachteilig ist jedoch gegenüber den Ausführungsbeispielen gemäß Fig.1 und Fig.2 die vergrößerte Anzahl möglicher Leckstrompfade.

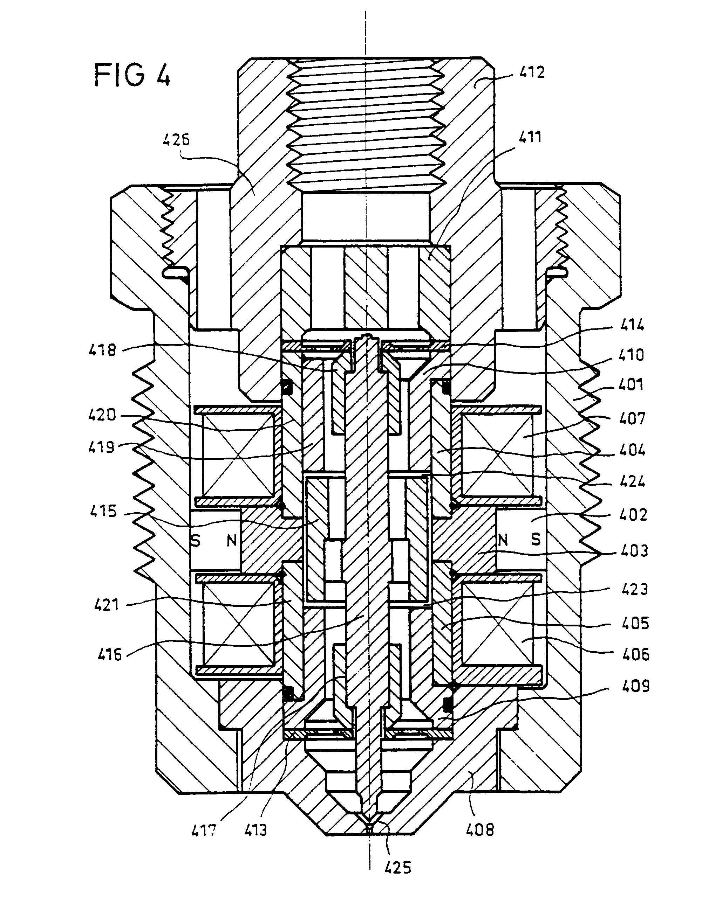

In Fig.4 ist ein Hochdruckeinspritzventil mit einem polarisierten Magnetkreis dargestellt. Der prinzipielle Aufbau des polarisierten Magnetkreises ist bekannt. Der Auslegungsdruck des Ventils beträgt ca. 1000 bar. Der Außendurchmesser des Ventils beträgt ca. 22 mm. Das Ventil erlaubt im Vergleich zu den Ventilausführungen gemäß Fig.1 bis Fig.3 die schnellsten Stellbewegungen. Nachteilig ist jedoch ein erheblich vergrößerter Bauaufwand.

In Fig.4 ist auf der linken Seite eine monostabile, auf der rechten Seite eine bistabile Ventilausführung dargestellt. Hierbei wird unter einer monostabilen Ausführung ein Ventil verstanden, das nach Abschalten des Erregerstromes von selbst in die geschlossene Lage gelangt. Die monostabile Ausführung bietet den Vorteil einer erhöhten Sicherheit bei eventuellen Funktionsstörungen der elektrischen Ansteuerschaltung. bei einer bistabilen Ausführung ist zum Schließen des Ventils ein elektrischer Gegenimpuls erforderlich. Die bistabile Ausführung bietet den Vorteil eines besseren Wirkungsgrades und damit einer größeren Arbeitsgeschwindigkeit. Das dargestellte Ventil besitzt als Besonderheit eine reibungsfreie Ankeraufhängung zwischen zwei Membranfedern mit einer sehr steilen Federkennlinie. In halbgeöffneter Stellung des Ventils ist die Federkraft Null. Das Maximum der Federkraft wird in den jeweiligen Endlagen des Ventils sowohl in geöffneter als auch in geschlossener Stellung erreicht. Um den höchstmöglichen Wirkungsgrad zu erzielen, sollte die Federkraft in der geschlossenen Stellung des Ventils in etwa der Summe aus der dauermagnetischen Kraft des Magnetkreises und der aus Sicherheitsgründen erforderlichen Schließkraft entsprechen. Mit einer steilen Federkennlinie sind bei Einspritzventilen mit polarisierten Magnetkreisen erheblich schnellere Stellbewegungen erzielbar, als mit den üblichen flachen Federkennlinien. Flache Federkennlinien würden sich bei der Verwendung von Schraubenfedern ergeben. Das Ventil ist für einen Kraftstoffdruck von bis zu ca. 1000 bar geeignet.

Das polarisierte Magnetventil gemäß Fig.4 besitzt einen rohrförmigen Anker 415, der mit der Ventilnadel 416 fest verbunden ist. Der Außendurchmesser des Ankers 415 beträgt vorzugsweise 7-8 mm. Die Wandstärke des Ankers beträgt vorzugsweise ca. 0.8-1.2 mm. Die gesamte Masse von Anker 415 und Ventilnadel 416 beträgt ca. 1.5 g. Die Ventilnadel 416 ist an der Oberseite und Unterseite in den Membranfedern 413 und 414 aufgehängt. Die Kalibrierung der Kennlinie der Membranfedern 413 und 414 erfolgt durch entsprechendes Abschleifen der flachen Seite dieser Federn. Zwischen den Membranfedern 413 und 414 und der Ventilnadel 416 sind die Schwingungstilger 417 und 418 angeordnet. Die Membranfedern 413 und 414 sind mit Durchbrüchen versehen, die den Druchtritt von Kraftstoff ermöglichen. Der Ankerhub wird durch den oberen Anschlag 411 begrenzt, an dem die Ventilnadel 416 bei geöffnetem Ventil zum Anschlag gelangt.

Die beiden Magnetpole des Ventils sind innerhalb von nichtmagnetisierbaren Hülsen angeordnet. Das bistabile Ventil auf der rechten Seite von Fig.4 besitzt einen magnettechnisch symmetrischen Aufbau. Hierbei sind nur zwischen dem Anker 415 und den beiden Magnetpolen 409 und 410 Luftspalte 423 und 424 angeordnet. Bei der monostabilen Ventilausführung auf der linken Seite von Fig.4 wird durch die nichtmagnetisierbare Hülse 420 ein zusätzlicher Luftspalt zwischen dem oberen Magnetpol 419 und dem Verschlußstopfen 426 gebildet. Durch diesen zusätzlichen Luftspalt wird das Magnetfeld innerhalb des oberen Arbeitsluftspaltes 424 abgeschwächt. Hierdurch wird die selbständige Rückkehr des Ankers 415 in die Ruhelage durch das Stärkere Magnetfeld im Bereich des unteren Arbeitsluftspaltes 423 sichergestellt. Zwischen dem Anker 415 und den Magnetpolen verbleiben in der jeweiligen Endlage Restluftspalte 423 und 424 von vorzugsweise jeweils ca. 0.05 mm. Die Restluftspalte sind erforderlich, um hydraulisches Kleben zu vermeiden. Weiterhin wird im Bereich der Restluftspalte eine erwünschte hydraulische Dämpfung der Stellbewegungen erzielt. Eine monostabile Arbeitsweise läßt sich auch durch eine asymmetrische Anordnung der Restluftspalte 423 und 424 erzieren. Hierzu wird der obere Restluftspalt 424 erheblich länger als der untere Restluftspalt 423 ausgeführt, so daß sich im Bereich des unteren Restluftspaltes 423 ein entsprechend stärkeres dauermagnetisches Feld ausbildet, das die selbständige Rückstellung bewirkt. Die auf der linken Seite von Fig.4 dargestellte monostabile Anordnung mit einem zusätzlichen magnetischen Luftspalt zwischen Pol 419 und Verschlußstopfen 426 ist jedoch magnettechnisch günstiger.

Das dauermagnetische Feld wird durch den Dauermagneten 402 erzeugt, der aus mehreren getrennten Segmenten aufgebaut sein kann. Der innere magnetische Rückschluß zum Anker 415 erfolgt durch den Mittelpol 403. Der äußere magnetische Rückschluß zu den beiden Magnetpolen 409 und 410 erfolgt durch das Ventilgehäuse 401, den oberen Verschlußstopfen 412 und den Sitzträger 408. Der Mittelpol 403 ist mit den nicht magnetisierbaren Hülsen 404 und 405 bzw. 420 fest verbunden. Die Verbindung erfolgt vorzugsweise durch eine Laserschweißung oder durch Hartlöten. Die elektrische Erregung erfolgt durch die beiden Magnetspulen 406 und 407. Die Innenteile des Ventils werden mit dem oberen Verschlußstopfen 412 im Ventilgehäuse 401 gemeinsam festgeklemmt. Der Innenraum des Ventils wird vom vollen Systemdruck beaufschlagt. Die Einbauräume der Magnetspulen 406 und 407 sind gegenüber dem Systemdruck abgedichtet.

Abschließen sei bemerkt, daß das erfindungsgemäße Ventil auch mit einer anderen als der dargestellten einfachen Düsenform ausgestattet werden kann. Solche anderen Düsenformen sind von den üblichen mechanischen Einspritzdüsen bekannt. Diese an sich bekannten Düsenformen können in miniaturisierter Form ohne weiteres bei dem erfindungsgemäßen Ventil zur Anwendung kommen. Beispielsweise kann das Ventil zur Verbesserung der Zerstäubung mit einer miniaturisierten Zapfendüse ausgestattet werden, wobei dann der Zapfendurchmesser ca. 0.5-0.7 mm betragen sollte. Weiterhin kann die Zerstäubung durch sehr kurze Düsen mit einer Länge von weniger als 0.5 mm verbessert werden. Die Mündung einer solchen Düse kann zur Verbesserung der mechanischen Festigkeit versenkt werden. Die Anwendung derartig kurzer Düsen wird bei dem erfindungsgemäßen Ventil wegen der geringen mechanischen Belastung im Sitzbereich ermöglicht. Weiterhin kann die Düse brennraumseitig mit einer Abrundung mit einem Radius von einigen 1/100 mm oder mit einem konischen Auslauf versehen werden, wodurch ebenfalls die Zerstäubung verbessert wird und ein größerer Abspritzkegel erzielt wird. Innerhalb der Einspritzdüse oder an der Ventilnadel können Wirbelkörper zur Erzeugung eines Kraftstoffdralls angeordnet werden. Ferner kann unterhalb des Ventilsitzes ein Sackloch angeordnet werden, das ein oder mehrere schräg angeordnete Düsen mit Kraftstoff versorgt. Hierdurch ist ein Änderung der Strahlrichtung möglich. Allerdings wird die Strömungsqualität im Zuströmbereich der Düse durch das Sackloch erheblich verschlechtert, was insgesamt stets eine erhebliche Verschlechterung der dynamischen Eigenschaften des Ventils zur Folge hat. Auf Sacklöcher unterhalb des Ventilsitzes sollte daher bei dem erfindungsgemäßen Ventil nach Möglichkeit verzichtet werden.

Die angegebenen Dimensionierungen und Verbindungsverfahren sind innerhalb des Rahmens der Ansprüche zwar als besonders zweckmäßig, jedoch nur beispielhaft zu verstehen. Preßverbindungen können beispielsweise durch Schraubverbindungen ersetzt werden. Bei den angegebenen Dimensionierungen werden bei einem abweichenden Auslegungsdruck häufig geringfügig abweichende Abmessungen notwendig werden. Auch können besondere Einbaubedingungen abweichende Gehäuseformen erforderlich machen. Derartige einfache Abänderungen sind vom Fachmann leicht durchzuführen.

Weiterhin sei bemerkt, daß das erfindungsgemäße Ventil theoretisch auch mit einem kragenförmigen Anschlag ausgestattet werden könnte, der die Ventilnadel teilweise umfaßt. Der kragenförmige Anschlag kann einen einzigen oder mehrere radial gleichmäßig verteilte getrennte Anschlagbereiche aufweisen. Zur Sicherstellung der Funktionsfähigkeit müßte die Anschlagfläche eines derartigen Anschlags nur ausreichend klein ausgeführt werden. Eine derartige Anschlagsform ist aus dem Bereich der Niederdruckeinspritzventile allgemein bekannt. Bei einem Kragenförmigen Anschlag bestehen jedoch außerordentlich große Schwierigkeiten, eine exakte Parallelität der Anschlagflächen einzuhalten. Die Einhaltung der erforderlichen Parallelität ist selbst mit sehr präzisen Bearbeitungsmethoden kaum möglich. In der Praxis werden sich daher bei einem solchen Hochdruckeinspritzventil mit kragenförmigen Anschlag häufig zeitlich stark schwankende hydraulische Klebekräfte ergeben, die unzulässige, stark schwankende Schließzeiten des Ventils zur Folge haben. Eine solche Ausführungsform verursacht einen hohen Fertigungsausschuß. Daher wird man bei dem Erfindungsgemäßen Hochdruckeinspritzventil stets die hier vorgeschlagene Bauform mit einem einzigen zentralen Anschlag bevorzugen.

Weitere zweckmäßige Auslegungen und Varianten des erfindungsgemäßen Kraftstoffeinspritzventils können den Ansprüchen entnommen werden. Die eingefügten Bezugszahlen sollen nur zur Verdeutlichung dienen, und sind nicht als Beschränkung der Ansprüche zu verstehen. Die erste Ziffer der Bezugszahlen weist auf die entsprechende Zeichnungsnummer.

**Patentansprüche**

1. Elektromagnetisches Hochdruck-Einspritzventil, das zur Einspritzung von Kraftstoff unmittelbar in den Brennraum von Brennkraftmaschinen dient, mit einem nadelförmigen Ventilschließkörper (113), der mit dem Anker (112) eines Elektromagneten fest verbunden ist, wobei der Ventilschließkörper zusammen mit dem Anker längs einer Zentralachse des Einspritzventils verschiebbar und deren Verschiebungsbewegung einerseits durch einen Ventilsitz (120) und andererseits durch ein Anschlagelement (126) begrenzt ist, **dadurch gekennzeichnet,**
   - daß der Anker (112) vollständig vor unter Hochdruck stehendem Kraftstoff umgeben ist,
   - daß die gesamte Masse der bewegten Teile des Einspritzventils höchstens 2,5 g und vorzugsweise 1 bis 2,5 g beträgt,
   - daß das Anschlagelement (126) eine Anschlagfläche aufweist, die von der Zentralachse des Einspritzventils geschnitten wird, und
   - daß sowohl die Berührungsfläche zwischen dem Anker (112) und der Anschlagfläche als auch der nicht druckausgeglichene Querschnitt des Ventilsschließkörpers (119) bei dessen Auflage auf dem Ventilsitz (120) jeweils weniger als 1 mm², vorzugsweise 0,2 bis 0,5 mm² betragen.

2. Einspritzventil nach Anspruch 1, dadurch gekennzeichnet, daß es einen Ventilsitzträger (117) aufweist,
   - der mit dem Einspritzventil verschraubt und gegenüber diesem verspannt ist,
   - durch dessen Einschraubtiefe der Ankerhub justiert wird, und
   - der mit einer umlaufenden Nut (220) versehen ist, deren Innendurchmesser geringer als der Gewindedurchmesser ist, und die einen kragenförmigen, verformbaren Bereich (213) des Ventilsitzträgers (117) begrenzt, der gegenüber dem Einspritzventil mechanisch verspannt ist.

3. Einspritzventil nach Anspruch 1,
dadurch gekennzeichnet,

- daß es einen Schwingungstilger (111) zur Dämpfung des Schließprellens für den durch die Kraft einer Rückstellfeder (110) auf den Ventilsitz (120) gepreßten Ventil-Schließkörper (119) aufweist, der dem vollen Kraftstoffdruck ausgesetzt ist,

- daß der Schwingungstilger (114) die Ventilnadel (113) umfaßt und durch eine zusätzliche Feder (115), deren Kraft derjenigen der Rückstellfeder (110) entgegengerichtet ist, gegen die Ventilnadel gepreßt wird,

- daß die Federkraft der zusätzlichen Feder (115) nur einen Bruchteil - vorzugsweise etwa 10 % - der Kraft der Rückstellfeder (110) beträgt, und

- daß die Masse des Schwingungstilgers (114) nur einen Bruchteil - vorzugsweise etwa 10 bis 20 % - der Masse der übrigen bewegten Teile des Ventils beträgt.

4. Einspritzventil nach Anspruch 1,
dadurch gekennzeichnet,

- daß es einen polarisierten Magnetkreis zur raschen Ventilbetätigung mit einem Ankerhub von weniger als 0,3 mm - vorzugsweise etwa 0,1 mm - aufweist,

- daß der Anker (415) des Magnetkreises zwischen mindestens zwei Federn (413, 414) aufgehängt ist, die eine sehr steile Federkennlinie besitzen und deren Federkraft einander entgegengerichtet ist,

- daß die resultierende Federkraft der Federn (413, 414) in den jeweiligen Endlagen der dauermagnetischen Kraft entgegengerichtet ist und

- daß die resultierende Federkraft der Federn (413, 414) in einer Zwischenlage des Ankers (415) Null ist und in den jeweiligen Endlagen des Ankers Extremwerte erreicht.

5. Einspritzventil nach Anspruch 1,
dadurch gekennzeichnet,
daß der Magnetpol (108, 205) des Ventils von einer nicht magnetisierbaren Hülse (107, 208) getragen ist, die zur radialen Führung des Ankers (112, 215) dient.

6. Einspritzventil nach Anspruch 1,
dadurch gekennzeichnet,
daß der Anker (112, 307) des Ventils rohrförmig oder hutförmig ausgebildet ist und daß ein Arbeitsluftspalt (127, 315) des Magnetkreises innerhalb der Magnetspule (105, 303) angeordnet ist.

7. Einspritzventil nach Anspruch 6,

dadurch gekennzeichnet,
daß der Anker von mindestens einer Membranfeder (305) radial geführt ist.

8. Einspritzventil nach Anspruch 1,
dadurch gekennzeichnet,
daß die Ventilnadel (113, 210, 308) einen stiftförmigen oder ballischen Anschlag (125, 319) trägt, der die Polfläche des Ankers (112, 215, 307) um etwa 30 bis 100 Mikrometer überragt.

9. Einspritzventil nach Anspruch 1,
dadurch gekennzeichnet,
daß zwischen der Rückstellfeder (110) und der Ventilnadel (113) ein Schwingungstilger (111) angeordnet ist, der von der Ventilnadel getragen wird.

10. Einspritzventil nach Anspruch 1,
dadurch gekennzeichnet,
daß die Ventilnadel (113) einen Zapfen trägt, der die Einspritzdüse (118) druchragt und dessen Durchmesser etwa 0,4 bis 0,7 mm beträgt.

**Claims**

1. Electromagnetic high-pressure injection valve which serves for the direct injection of fuel into the combustion chamber of internal combustion engines and has a needle-shaped valve-closing body (113) which is firmly connected to the armature (112) of an electromagnet, the valve-closing body being displaced together with the armature along a central axis of the injection valve and their displacement being limited on the one hand by a valve seat (120) and on the other hand by a stop element (126), characterised in that

- the armature (112) is completely surrounded by fuel under high pressure;

- the total mass of the moving parts of the injection valve is at most 2.5 g and preferably 1 to 2.5 g,

- the stop element (126) has a stop face which is intersected by the central axis of the injection valve, and

- both the contact area between the armature (112) and the stop face and the nonpressure-balanced cross-section of the valve-closing body (119) when the latter rests on the valve seat (120) are in each case less than 1 mm$^2$, preferably 0.2 to 0.5 mm$^2$.

2. Injection valve according to Claim 1, characterised in that the said valve has a valve seat base (117)

- which is screwed to the injection valve and braced relative to the latter,

- by means of the screw-in depth of which the armature stroke is adjusted, and
- which is provided with an encircling groove (220), the inside diameter of which is smaller than the thread diameter and which delimits a collar-shaped deformable region (213) of the valve seat base (117) which is braced mechanically relative to the injection valve.

3. Injection valve according to Claim 1, characterised in that
- the said valve has a vibration damper (111) for damping the closing rebound for the valve-closing member (119), which is pressed onto the valve seat (120) by the force of a return spring (110) and is exposed to the full fuel pressure,
- the vibration damper (114) clasps the valve needle (113) and is pressed against the valve needle by an additional spring (115), the force of which is opposed to that of the return spring (110),
- the spring force of the additional spring (115) is only a fraction - preferably about 10% - of the force of the return spring (110), and
- the mass of the vibration damper (114) is only a fraction - preferably about 10 to 20% - of the mass of the remaining moving parts of the valve.

4. Injection valve according to Claim 1, characterised in that
- the said valve has a polarised magnetic circuit for rapid valve actuation with an armature stroke of less than 0.3 mm - preferably about 0.1 mm,
- the armature (415) of the magnetic circuit is suspended between at least two springs (413, 414) which have a very steep elasticity characteristic and the spring forces of which are opposed to each other,
- the resulting spring force of the springs (413, 414) in the respective end positions is opposed to the permanent-magnetic force and
- the resulting spring force of the springs (413, 414) in an intermediate position of the armature (415) is zero and reaches extreme values in the respective end positions of the armature.

5. Injection valve according to Claim 1, characterised in that the magnet pole (108, 205) of the valve is supported by a nonmagnetisable sleeve (107, 208) which serves for the radial guidance of the armature (112, 215).

6. Injection valve according to Claim 1, characterised in that the armature (112, 307) of the valve is of tubular or hat-shaped design and in that an air gap (127, 315) of the magnetic circuit is arranged within the magnet coil (105, 303).

7. Injection valve according to Claim 6, characterised in that the armature is radially guided by at least one diaphragm spring (305).

8. Injection valve according to Claim 1, characterised in that the valve needle (113, 210, 308) bears a pin-shaped or spherical stop (125, 319) which projects above the pole face of the armature (112, 215, 307) by about 30 to 100 micrometers.

9. Injection valve according to Claim 1, characterised in that a vibration damper (111), which is supported by the valve needle, is arranged between the return spring (110) and the valve needle (113).

10. Injection valve according to Claim 1, characterised in that the valve needle (113) bears a pintle which projects through the injection nozzle (118) and the diameter of which is about 0.4 to 0.7 mm.

## Revendications

1. Soupape électromagnétique d'injection à haute pression, qui sert à injecter du carburant directement dans la chambre de combustion de moteurs à combustion interne, comportant un obturateur de soupape (113) en forme de pointeau, qui est relié rigidement à l'armature (112) d'un électroaimant, l'obturateur de soupape étant mobile, conjointement avec l'armature, le long d'un axe central de la soupape d'injection, et son mouvement de déplacement étant limité d'une part par un siège de soupape (120) et d'autre part par un élément de butée (126),
caractérisée par le fait
- que l'armature (112) est entourée complètement du carburant à haute pression,
- que la masse totale des parties mobiles de la soupape d'injection est égale au maximum à 2,5 g et de préférence est comprise entre 1 et 2,5 g,
- que l'élément de butée (126) possède une surface de butée, qui est coupée par l'axe central de la soupape d'injection, et
- qu'aussi bien la surface de contact entre l'armature (112) et la surface de butée que la section transversale, non compensée en pression, de l'obturateur de soupape (119) sont respectivement inférieures à 1 mm$^2$ et sont comprises, de préférence, entre 0,2 et 0,5 mm$^2$, lorsque l'obturateur de soupape est appliqué sur le siège de soupape (120).

**2.** Soupape d'injection suivant la revendication 1, caractérisée par le fait
- qu'elle comporte un support (117) du siège de soupape,
- qui est fixé par vissage sur la soupape d'injection et qui est bloqué par rapport à cette dernière,
- dont la profondeur de vissage permet d'ajuster la course de l'armature, et
- qui est pourvu d'une gorge circonférentielle (220), dont le diamètre intérieur est inférieur au diamètre du filetage et qui délimite une zone déformable en forme de collet (213) du support (117) du siège de soupape, qui est bloqué mécaniquement par rapport à la soupape d'injection.

**3.** Soupape d'injection suivant la revendication 1, caractérisée par le fait
- qu'elle possède un amortisseur d'oscillations (111) servant à amortir le rebond de fermeture de l'obturateur de soupape (119), qui est repoussé contre le siège de soupape (120) par la force d'un ressort de rappel (110) et qui est soumis à la pression complète du carburant,
- que l'amortisseur d'oscillations (114) entoure le pointeau (113) de la soupape et est repoussé contre ce dernier par un ressort supplémentaire (115), dont la force est dirigée en sens opposé à celle du ressort de rappel (110),
- que la force élastique du ressort supplémentaire (115) est égale seulement à une fraction -de préférence environ 10 %- de la force du ressort de rappel (110), et
- que la masse de l'amortisseur d'oscillations (114) est égale seulement à une fraction -de préférence environ 10 à 20 %- de la masse des autres parties mobiles de la soupape.

**4.** Soupape d'injection suivant la revendication 1, caractérisée par le fait
- qu'elle possède un circuit magnétique polarisé permettant l'actionnement rapide de la soupape avec une course de l'armature inférieure à 0,3 mm - égale de préférence à environ 0,1 mm,
- que l'armature (415) du circuit magnétique est suspendue entre au moins deux ressorts (413,414), qui possèdent une courbe caractéristique d'élasticité très abrupte et qui appliquent des forces de sens réciproquement opposé l'une à l'autre,
- que la force résultante des ressorts (413,414) dans les positions d'extrémité respectives est de sens opposé de la force de l'aimant permanent, et

- que la force élastique résultante des ressorts (413,414) est nulle dans une position intermédiaire de l'armature (414) et atteint des valeurs extrêmes dans les positions d'extrémité respectives de l'armature.

**5.** Soupape d'injection suivant la revendication 1, caractérisée par le fait
que le pôle magnétique (108,205) de la soupape est porté par une douille non aimantable (107,208), qui sert à guider radialement l'armature (112,215).

**6.** Soupape d'injection suivant la revendication 1, caractérisée par le fait
que l'armature (112,307) de la soupape a une forme tubulaire ou une forme en chapeau et qu'un entrefer de travail (127,315) du circuit magnétique est disposé à l'intérieur de la bobine magnétique (105,303).

**7.** Soupape d'injection suivant la revendication 6, caractérisée par le fait
que l'armature est guidée radialement par au moins un ressort à membrane (305).

**8.** Soupape d'injection suivant la revendication 1, caractérisée par le fait que le pointeau (113,210,308) de la soupape porte une butée en forme de tige ou bombée (125,319), qui fait saillie de 30 à 100 microns de la face polaire de l'armature (112,215,307).

**9.** Soupape d'injection suivant la revendication 1, caractérisée par le fait
qu'entre le ressort de rappel (110) et le pointeau (113) de la soupape est disposé un amortisseur d'oscillations (111), qui est porté par le pointeau de la soupape.

**10.** Soupape d'injection suivant la revendication 1, caractérisée par le fait
que le pointeau (113) de la soupape porte un téton qui traverse la buse d'injection (118) et dont le diamètre est compris entre environ 0,4 et 0,7 mm.

EP 0 459 999 B1

FIG 1

13

FIG 2

FIG 3

# FIG 4